# EUROPEAN PATENT APPLICATION

(11) **EP 1 956 055 A2**
(43) Date of publication of application: **13.08.2008**
(21) Application number: 07101806.3
(22) Date of filing: 06.02.2007
(51) Int. Cl.: C09C 1/62, C09C 1/64

(54) **Low emissive camouflage flake**

(30) Priority: 01.02.2007 US 887634 P
(71) Applicant: SAAB AB, 581 88 Linköping (SE)
(72) Inventor: Edman, Peter, 593 34 Västervik (SE); Jersblad, Johan, 593 42 Västervik (SE)
(74) Representative: Herbjörnsen, Rut

(57) **Abstract**

To provide a camouflage active component that can be utilized in for example skin camouflage or camouflage paint to provide both visual and thermal camouflage, the present invention presents a low emissive camouflage flake (1, 2) wherein a metal layer (11, 21) having reflective properties in the thermal radiation range is coated with a coloured coating (13, 23) having transparency properties in the thermal radiation range. The metal layer (11,21) gives the camouflage flake (1,2) its low emission properties in the thermal radiation range while the coloured coating (13, 23) absorbs and or reflects radiation in certain parts of the visible radiation range, thereby giving the camouflage flakes (1, 2) a desired colour. The low emissive camouflage flake (1, 2) may also comprise a stabilizing film (25), such as a polyester film, to simplify the manufacturing of the flakes.

## Description

### Technical field

The present invention relates to a low emissive camouflage flake and a manufacturing method thereof, briefly described by the preambles of claim 1 and 15, respectively, a skin camouflage and a manufacturing method thereof, briefly described by the preambles of claim 24 and 29, respectively, and a camouflage paint and a manufacturing method thereof, briefly described by the preambles of claim 30 and 32, respectively,

### Background of the invention

Exposed skin reflects light in the wavelength region of 400-2500 nanometres and these reflections make it easy to either visually or by the use of near infrared sensors detect uncovered skin. The use of skin covering means for reducing such reflections and hence avoiding detection is well known and used by for example soldiers in combat.

In the same way, camouflage paint for military equipment serves to reduce reflections from incident light. Besides reducing reflections, skin covering camouflage means and camouflage paints are composed by materials making the reflections mimic the reflections from the surroundings in order to make the object to which they are applied hard to distinguish from the ambient environment.

Nowadays, not only visual camouflage but also thermal camouflage is needed since sophisticated devices for thermal detection, such as infrared (IR) sniper scopes, thermal viewers, FLIR devices (Forward Looking Infrared), etc, are common military equipment.

Thermal devices such as the ones mentioned above reveal objects that appear hotter or colder than their surrounding environment. Even very small temperature differences between a heat source and the ambient environment are detectable. The emission of heat radiation from, for example, exposed skin and heat generating military equipment, such as vehicles and weapon systems, creates a thermal contrast to the background and is hence easily detected by such a device.

Some areas of the heat radiation spectrum, however, are not easily detected by thermal devices due to the fact that some wavelengths of the electromagnetic spectrum are well absorbed by the atmosphere. This applies to, for example, the heat radiation wavelength range of 5-8 micrometer and for wavelengths longer than 14 micrometers. Therefore, thermal devices are normally constructed to be able to detect wavelengths falling within the ranges of 3-5 micrometer and 8-14 micrometer.

One way of avoiding detection by thermal devices is to reduce the thermal contrast between the target and the background. This can be achieved by, for example, making the potential target reflect the heat radiation incident from the surrounding environment, thereby giving the object a similar "thermal image" as the background.

Camouflage materials and paints for avoiding both visual and thermal detection intended for military vehicles and equipment, such as tanks, aircrafts and battleships are well known in the art. US patent No. 4,495,239 discloses a camouflage material comprising a base layer, a metal layer and a paint layer which imitates the visible and near IR spectral reflective properties of a natural background. The material is formed by coating the base layer with a reflecting metal layer and applying camouflage paint thereon. In the disclosed embodiment the base layer consists of camouflage net fabric. However, no solution is proposed for providing visual and thermal camouflage to surfaces which are hard or unsuitable to coat with a painted metal layer, such as the skin of a human being.

US Patent No. 5254406 describes a facepaint material for application to the skin of the human body to reduce the possibility of detection of the user by a thermal imaging device. The facepaint material comprises metallic particles embedded in a jelly-like medium (called "vehicle") having no strong radiation absorption bands in the 8-14 micrometer wavelength region. Therefore, the heat radiation from the surrounding environment falling within the wavelength range of 8-14 micrometer passes through the jelly-like medium and is reflected by the metallic particles, thereby reducing the possibility to detect the user of the facepaint with a thermal device active in that particular wavelength region. However, metallic particles are also highly reflective to light in the visible spectrum which gives the disclosed facepaint a metallic lustre. Therefore, a soldier carrying it is very easily detected by eye.

DE 19827989 describes a camouflage paint comprising a make-up base substance consisting of fat, wax, paraffin, or vaseline, or any mixture of these, in which metal particles and/or pigments are contained.

US Patent No. 6468647 discloses infrared reflective visually colored metal substrates or metal-coated particles which can be utilized in a variety of applications, such as coatings, fabrics, tapes and face paint, to provide infrared signature control as well as visual camouflage. By burnishing pigments into a metallic surface, a modified surface which retains the colour of the pigment, and in addition still retains high infrared reflectivity and low emission, is obtained. By burnishing pigments into metal particles, coloured and thermal radiation reflective particles for use in e.g. facepaint are obtained. However, the burnishing of metal particles with pigments is an advanced and time consuming process.

### Summary of the invention

It is an object of the present invention to provide a camouflage active component that can be utilized in various applications to provide both visual and thermal camouflage.

The object is achieved by a low emissive camouflage flake comprising a metal layer having reflective properties in the thermal radiation range, said metal layer being coated with a coloured coating having transparency properties in the thermal radiation range. The metal may be aluminium or any metal or alloy with similar properties. The coloured coating may consist of a lacquer, a thin plastic film, or it may consist of a thin metal/metal oxide layer, such as a sputtering deposit layer. The metal layer gives the camouflage flake its low emission properties in the thermal radiation range while the coloured coating absorbs and or reflects radiation in certain parts of the visible radiation range, thereby giving the camouflage flakes a desired colour. The low emissive camouflage flakes according to the invention are camouflage active components which can be utilized in various applications in the field of camouflage to protect an object onto which they are applied from both visual and thermal detection. The low emissive camouflage flake may also comprise a stabilizing film, such as a polyester film, to simplify the manufacturing of the flakes.

A manufacturing method for manufacturing said low emissive camouflage flakes is also provided, wherein a metal layer is coated on at least one side with a coloured coating to form a "low emissive camouflage sheet". The sheet is then divided into small camouflage flakes, preferably by bringing the camouflage sheet into a cutting machine. In order to make the sheet more stable and give it more springiness, thereby facilitating the processing of the sheet and the manufacturing of the low emissive camouflage flakes, the metal layer may be applied on both sides of the above mentioned stabilizing film before being coated with the coloured coating on at least the side not being adjacent to the stabilizing film. The process of coating the metal layer with a coloured coating is preferably performed by applying a coloured lacquer, a thin coloured plastic film or a sputter deposit layer thereto. The method enables fast, cheap and "straight-forward" manufacturing of the low emissive camouflage flakes and is also advantageous compared to prior art in that the camouflage flakes are given their camouflage properties before they are divided into small components for use in various camouflage applications. Thereby, the step of processing microscopic particles is eliminated.

By adding the low emissive camouflage flakes to a suitable binder, a skin camouflage (face paint) or a camouflage paint for protecting a user or an object, respectively, from visual and thermal detection is provided. The binders are substantially transparent to thermal radiation, particularly in the 3-5 and 8-14 micrometer wavelength regions, in order for the radiation to pass through the binder and be reflected by the low emissive camouflage flakes carried therein. Preferably, the binders are also transparent to visible light so that the perceived colours of the skin camouflage and the camouflage paint are given exclusively by the low emissive camouflage flakes. The binder of the skin camouflage may for example consist of a mixture of jojoba oil, mango butter and beeswax. Except for having the above properties, this binder composition further has the advantages of being extremely skin-compatible (meaning that it causes no skin irritation to the user), odourless, anti-inflammatory, stable in a wide temperature range, durable and insect-bite protective. The binder of the camouflage paint may be based on any polymer having high enough adhesive capacity and being transparent to thermal radiation. An example of such binder is ethylene-acrylic acid co-polymer dispersion.

Manufacturing methods for the skin camouflage and the camouflage paint are also provided according to the invention. First, the low emissive camouflage flakes are manufactured according to the above described method where after they are added to a skin camouflage binder or a camouflage paint binder. Hence, the processes of manufacturing skin camouflage and camouflage paint that protects the object to which they are applied from visual and thermal detection is cheap, fast and extremely simple. Since the binder is the only thing separating the manufacturing processes, they can be performed at the same time with very little extra work.

### Brief description of the figures

Fig. 1 shows a low emissive camouflage flake according to a first embodiment of the present invention.
Fig. 2 shows a low emissive camouflage flake according to a second embodiment of the present invention.

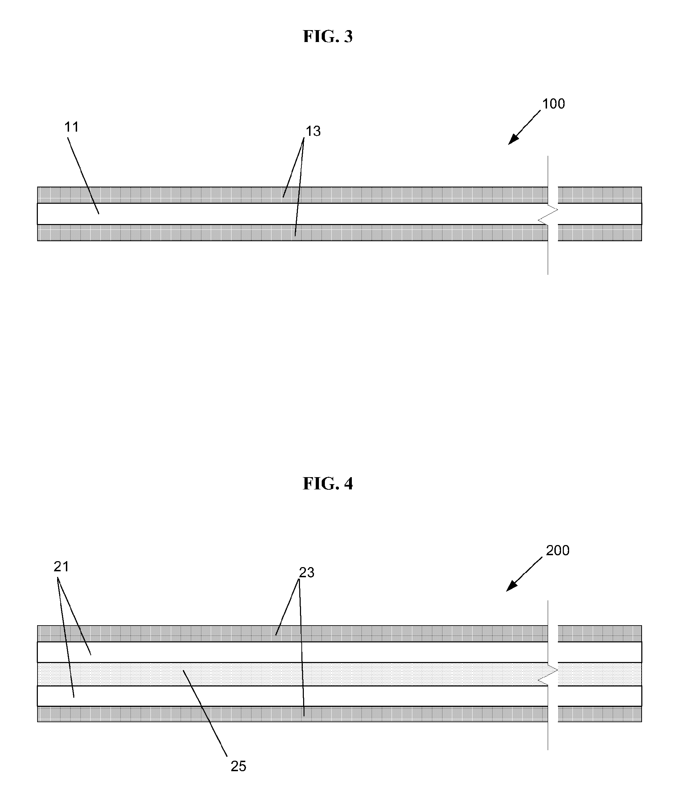

Fig. 3 shows a sheet from which the low emissive camouflage flakes according to the first embodiment of the present invention are manufactured.
Fig. 4 shows a sheet from which the low emissive camouflage flakes according to the second embodiment of the present invention are manufactured.
Fig. 5 shows a flowchart diagram illustrating the manufacturing process of the low emissive camouflage flakes shown in Fig. 1 and 2.

### Detailed description

### The low emissive camouflage flakes

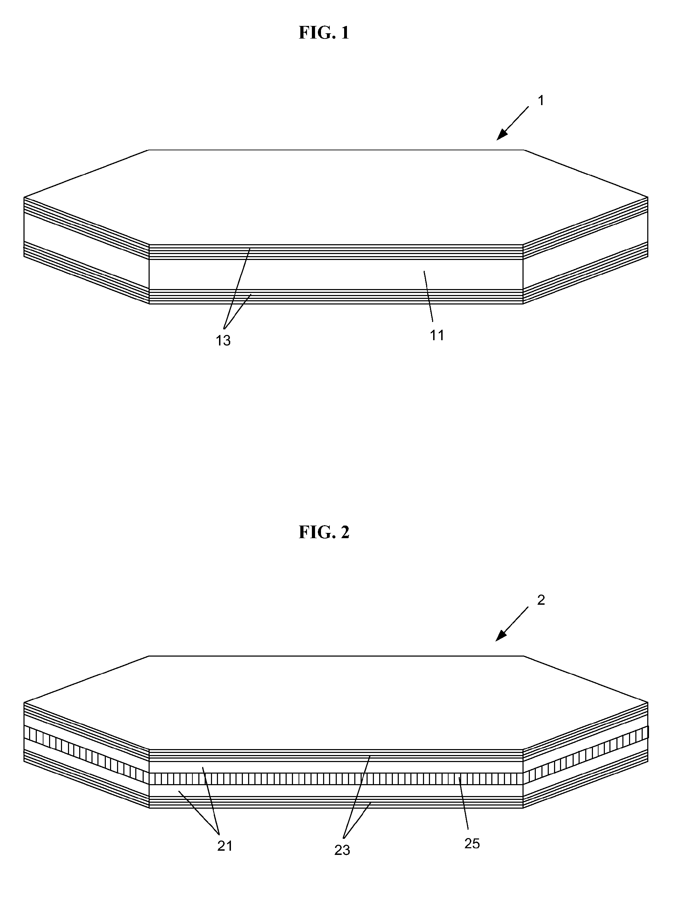

Fig. 1 shows a greatly magnified low emissive camouflage flake 1 according to a first embodiment of the present invention. The camouflage flake 1 comprises a metal layer 11, which is coated on both sides with a coloured coating 13. The flake 1 is only schematically depicted and is not to scale.

The metal layer 1 has low emission and high reflection properties in the thermal radiation range, particularly in the wavelength regions of 3-5 and 8-14 micrometers. By reflecting incident thermal radiation, the metal layer 11 provides the low emissive camouflage flakes 1 with a similar "thermal image" as the surrounding environment. In the first embodiment of the present invention, the metal layer 11 may consist of a metal foil 11. Preferably, the metal foil 11 is an aluminium foil since aluminium has reflective properties in the thermal radiation range and is less expensive than other metals having similar properties, such as for example copper, silver, gold or their alloys. The metal foil 11 should be thin in order for the camouflage flakes 1 to be comfortably applied to the skin of a user, but yet thick enough to reflect incident IR-radiation and to make the processing and manufacturing of the camouflage flakes 1 possible.

The coloured coating 13 is substantially transparent for thermal radiation and serves to reflect and/or absorb radiation in certain parts of the visible radiation range, thereby giving the camouflage flakes 1 a certain camouflage colour. For example, traditional colours for visual camouflage, such as dark green, light green, black and brown may be used. Bright coatings often gives the low emissive camouflage flake 1 slightly better IR-reflecting properties than dark coatings since they absorb less incident radiation in both the visual and thermal radiation range. The coloured coating 13 may consist of a coloured lacquer or a thin plastic film in the desired colour, or it may consist of an additional metal layer, preferably a very thin sputtering deposit layer.

Fig. 2 shows a greatly magnified low emissive camouflage flake 2 according to a second embodiment of the present invention. The camouflage flake 2 comprises a first layer consisting of a stabilizing film 25. The stabilizing film 25 is coated on both sides with a metal layer 21 and the metal layer 21 is in turn coated with a coloured coating 23 on at least the side not being adjacent to the stabilizing film 25. The flake 2 is only schematically depicted and is not to scale.

The stabilizing film 25 has no influence on the camouflage properties of the low emissive camouflage flakes 2 but serves the purpose of providing stability and springiness to a sheet 200 from which the flakes 2 are produced, thereby facilitating the processing of the sheet 200 and hence the manufacturing of the low emissive camouflage flakes 2. In a preferred embodiment, the stabilizing film 25 is a polyester film 25. Other materials than polyester may of course be used for the same purpose.

Although a metal foil similar to the metal foil 11 described above may constitute the metal layer 21 in the second embodiment of the present invention, the metal layer 21, applied on both sides of the stabilizing film 25, preferably consists of an evaporated metal film 21. The evaporated metal film 21 has the same properties and serves the same purpose as the metal foil 11 in the first embodiment. Evaporative metal film deposition is well known in the art and need not to be further disclosed here. In a preferred embodiment, the evaporated metal film 21 consists of aluminium. Thus, the stabilizing and springiness providing film 25 and the evaporated metal film 21 may constitute an aluminized polyester (PET) film. However, the evaporated metal film may consist of other metals than aluminium, e.g. copper, silver and gold. Moreover, although the metal layer 21 in a preferred embodiment consists of an evaporated metal film, a person skilled in the art can appreciate that there are numerous methods, such as for example other vacuum deposition techniques, of applying a metal layer 21 on the stabilizing film 25.

The coloured coating 23 has the same function and properties as the above described coloured coating 13 and consists of a coloured lacquer, a coloured thin plastic film or a metal/metal oxide deposition layer, such as a sputter deposit layer.

### Manufacturing the low emissive camouflage flakes

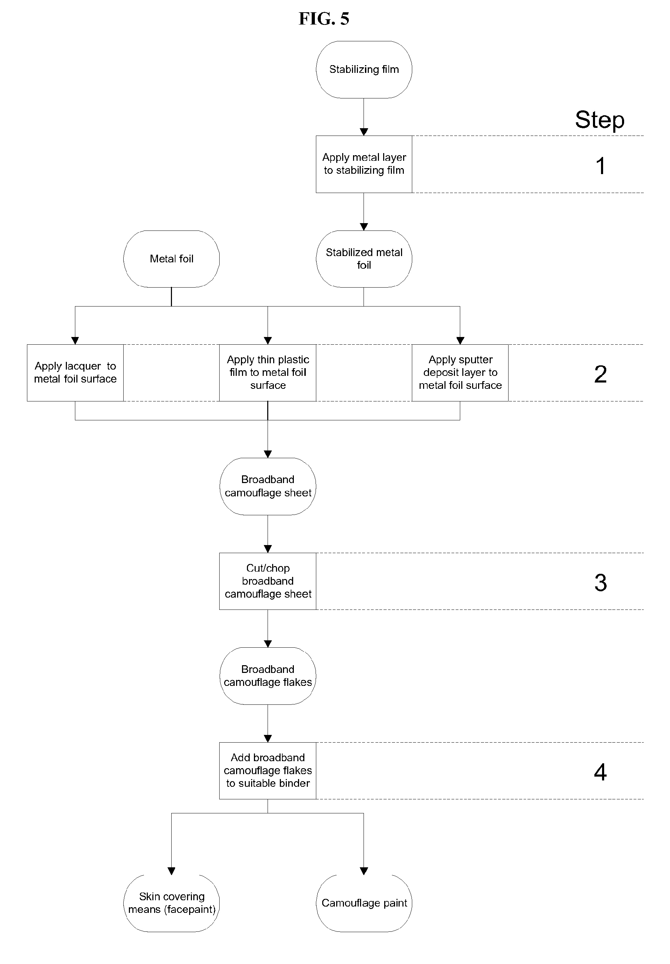

Reference will now be made to Fig. 5, in which a manufacturing process of the low emissive camouflage flakes 1,2 is depicted in a flowchart diagram.

Step 1 only applies to the second embodiment of the present invention, in which a stabilizing film 25 is used to provide stability and springiness to the low emissive camouflage sheet 200 in order to facilitate the manufacturing of the low emissive camouflage flakes 2. In Step 1, the metal layer 21 is preferably evaporated onto the stabilizing film 25. The result is a stabilized metal foil or a "metallized stabilizing film", such as an aluminized polyester (PET) film. Such pre-treated aluminized PET films are available in trade and may be used to manufacture the low emissive camouflage flakes 2 according to the second embodiment of the present invention.

Step 2 discloses three different ways of applying the coloured coating 13, 23 to the metal layer 11, 21. One way of coating the metal layer 11, 21 with the coloured coating 13, 23 is to apply a thin layer of lacquer of the desired colour. Another way is to coat the metal layer 11 with a thin, coloured, plastic film. Yet another solution which has been found very effective when it comes to ensure the low emissive camouflage flakes 1, 2 good IR-radiation reflective properties is to coat the metal layer 11, 21 with a coloured coating 13, 23 by means of a sputtering process.

Sputtering is a physical process, commonly used for thin-film deposition, whereby atoms in a solid target material are ejected into the gas phase due to bombardment of the material by energetic ions. The sputtering process takes place in a vacuum chamber and by placing the metal layer 11, 21 inside the chamber, ejected atoms are deposited on the surface of the metal layer 11,21 and form a dark sputter deposit layer, constituting the coloured coating 13, 23. The sputtered material forming the sputter deposit layer 13, 23 can consist of for example nickel or aluminium and/or different metal oxides such as nickel oxide, aluminium oxide, and copper oxide. An advantage of the sputtering process is that the deposited layer 13, 23 can be made very thin and that its thickness can be very well defined. In fact, the thickness of the sputter deposit layer 13, 23 can be specified within a range of 5 nanometers. The thinness of the coloured coating 13, 23 when applied by means sputter deposition makes it substantially transparent to incident IR-radiation, which allows the IR-radiation to pass through the coloured coating 13, 23 and be reflected by the metal layer 11, 21 without any absorption taking place, thus giving the low emissive camouflage flakes 1,2 comprising a sputtered coloured coating 13, 23 very good thermal radiation reflecting abilities. However, the sputter deposit layer 13, 23 must be thick enough to absorb enough incident radiation in the visual radiation range to give the low emissive camouflage flakes 1, 2 a dark colour in order to avoid visual detection. The optimal thickness of the sputter deposit layer 13,23 for obtaining a maximum of IR-radiation reflection while obtaining sufficient absorption in the visual radiation range depends on the choice of sputter material. However, since the thickness of the sputter deposit layer 13,23 can be very well defined it can be tailored in dependency of the chosen sputter material. The sputtering process is also advantageous since the deposited layer has the same composition as the source material and since it is a relatively cheap and simple process. Nevertheless, other deposition techniques, such as thermal evaporation techniques and molecular beam epitaxy (MBE), can be employed according to the present invention to form the coloured coating 13, 23 in a similar way.

The metal foil and the coloured coating 13 of the first embodiment, or the stabilized metal foil and the coloured coating 23 of the second embodiment, constitute a low emissive camouflage sheet 100, 200 from which the low emissive camouflage flakes 1,2 are manufactured. In Step 3, the low emissive camouflage sheet 100, 200 is divided into flakes 1,2. This may be performed by, for example, cutting the sheet 100, 200 in a so called glitter cutting machine, such as the Model C-1 Glitter Cutting Machine from T&M Maschinenbau GmbH. Such a machine employs a stationary bed knife and a rotary knife to produce uniform hexagonal particles from aluminium films, polyester films, PVC films, or the like. The machine produces uniform hexagonal particles and can be configured to cut the low emissive camouflage sheet 100, 200 of the present invention into flakes 1, 2 with a size varying from 0.05 mm to 1 mm. According to a preferred embodiment, depending on the choice of material of the metal layer 11,21 and the coloured coating 13, 23, the processed sheet 100, 200 is chopped into flakes 1, 2 having a size of approximately 0.2-.8 mm. The shape of the flake 1,2 has no known influence on its visual or thermal camouflage properties. Other shapes, such as circular, rectangular or triangular flake shapes may also be used to implement the invention. Since the flakes 1, 2 may have different shapes the term "size" above should be interpreted as the maximum longitudinal extent of the low emissive camouflage flake 1,2 in any direction.

### Skin Camouflage

A skin camouflage for providing the user thereof protection from both visual and thermal detection is provided according to the present invention by adding the low emissive camouflage flakes 1, 2 to a suitable binder, as shown in Step 4 in Fig. 5. The binder must be transparent to wavelengths in the thermal radiation range in order to allow incident IR-radiation to pass through the binder and be reflected by the metal layer 11, 21 of the low emissive camouflage flakes 1, 2. Preferably, the binder is also visually transparent so that the colour of the camouflage paint is provided substantially by the coloured coating 13, 23 of the low emissive camouflage flakes 1,2.

Examples of materials having the above mentioned properties are waxes, oils and other types of fatty acids. It has been found that different compositions comprising at least some of the substances jojoba oil, cetyl alcohol, mango butter and beeswax are particularly suitable as binder in the skin camouflage according to the present invention. Jojoba oil is the liquid wax produced from the seed of the Jojoba plant and is commonly used as an ingredient in cosmetics and personal care products. Unlike most common vegetable oils, jojoba oil is chemically very similar to human sebum and, therefore, the skin camouflage using jojoba oil as binder is highly skin-compatible and causes no skin irritation to the user. Furthermore, refined jojoba oil is colourless and odourless which further increases the suitability of using it as binder in the skin camouflage of the present invention. A colourless binder allows the perceived colour of the skin camouflage to depend solely on the colour of the coloured coating 13, 23 of the camouflage flakes 1, 2. To obtain a skin camouflage having a consistency that allows easy application to the skin of the human body, the jojoba oil is preferably mixed with beeswax and mango butter. A suitable weight distribution between jojoba oil, mango butter, and beeswax in this binder composition is approximately 3:3:4 (i.e., three parts jojoba oil, three parts mango butter, and four parts beeswax). Another composition having suitable camouflage properties and consistency is a mixture of two parts of weight beeswax and three parts of weight mango butter. Yet another suitable composition is a mixture of five parts of weight beeswax, four parts of weight jojoba oil, and one part of weight cetyl alcohol. The latter substance facilitates removal of the skin camouflage from the skin of a user. The above mentioned substances may of course be replaced with other substances having similar properties. Examples of such substances are petrolatum and ceresine wax.

The weight percentage distribution between low emissive camouflage flakes 1, 2 and the binder is important for the camouflage properties of the skin camouflage. The greater the weight percentage of low emissive camouflage flakes 1, 2, in the mixture, the more incident heat radiation is reflected by the skin camouflage. Thus, the skin camouflage can be tailored to give the user thereof a similar "thermal image" as the ambient background no matter what the surrounding environment looks like. However, a too high percentage of camouflage flakes 1, 2 in the skin camouflage makes it too firm which in turn makes the skin camouflage hard to apply to the human skin. A suitable weight distribution between low emissive camouflage flakes 1, 2 and binder component in the skin camouflage has been found to be some where in between 1:1 and 2:1.

In another embodiment of the invention the binder comprises a mixture of cellulose and xanthane rubber. This mixture swells in water and forms a gel which, when applied to the skin of a user, emits the water contained therein (by vaporization) and forms a "camouflage gel layer" on the skin. This kind of binder composition is well known in the art of make-up and has, when employed as a binder according to one embodiment of the invention, the advantage of holding a high weight percentage of low emissive camouflage flakes 1,2 and yet be easily applicable to the skin of a user.

The described skin camouflage comprising low emissive camouflage flakes 1, 2 and a binder composed of a mixture of substances chosen from the group consisting of jojoba oil, cetyl alcohol, mango butter and beeswax ensures the user thereof an excellent thermal and visual camouflage. Particularly, the skin camouflage provides effective camouflage in the wavelength regions of 3-5 and 8-14 micrometers. The skin camouflage is easy and cheap to manufacture and can be offered in many different colours. It is easy to apply to the skin of the human body and is non-toxic and causes no skin irritation to the user. It has anti-inflammatory properties (since the jojoba oil contains myristic acid) and it is stable even when exposed to cold or hot temperatures. It is durable and withstands rain, sweat and wind without losing its effectiveness. The skin camouflage also protects the user from insect-bites, and to some extent also from muzzle sparks and powder residues, by forming a physical barrier on the skin. Other substances or oils, such as citronella oil, can be included in the skin camouflage to further enhance the insect-repellant properties.

While the skin camouflage has been described with respect to particular embodiments, those skilled in the art will recognise that the skin camouflage of the present invention is not limited to the specific embodiments described herein. Other substances and additives besides those described may also be used to implement the skin camouflage of the present invention.

### Camouflage Paint

A camouflage paint for camouflaging objects, such as military vehicles and equipment, is provided according to the present invention by adding the low emissive camouflage flakes 1, 2 to a suitable paint binder, as shown in Step 4 in Fig. 5. As for the skin camouflage disclosed above, the binder should be transparent to wavelengths in the thermal radiation range. Whether a particular binder is transparent to IR-radiation or not depends on the binder's chemical structure. Most chemical bonds absorbs IR-radiation and, in particular, the polar groups (e.g. C=O, N-H, C-O-) in the chemical structure of common binder materials absorb IR-radiation very well. That is, the more polar groups in the binder material, the worse IR transparency properties. However, the amount of polar groups in the binder material is important to the binder's ability to adhere to a surface. Therefore, a suitable binder has a chemical composition containing a small amount of polar groups to ensure good IR radiation transparency but yet a sufficient amount to ensure good adhesive ability. As in the case with skin camouflage, the binder is preferably visually transparent so that the colour of the camouflage paint is provided substantially by the coloured coating 13, 23 of the low emissive camouflage flakes 1,2. Various substances such as synthetic or natural resins, polyethylene, chlorinated polypropylene, polyurethanes, polyesters, melamines, epoxy, acrylic acid ester polymers, or any modifications of these substances, may be used as a binder in the camouflage paint. The fraction of camouflage flakes 1, 2 in relation to binder material must be high enough to give the object onto which the camouflage paint is applied sufficient IR and visual camouflage, but yet low enough to make the camouflage paint adhere to the surface of the object. Furthermore, the camouflage paint is preferably applied using conventional techniques such as brushing, spraying or rolling which require a certain minimum share of binder component. The optimal weight distribution between binder component and low emissive camouflage flakes 1,2 in the camouflage paint depends on which binder material is used but is approximately one part of weight binder component and two parts of weight camouflage flakes.

While the low emissive camouflage flakes 1, 2 of the present invention has been described with respect to particular embodiments, those skilled in the art will recognize that the present invention is not limited to the specific embodiments described and illustrated herein. Different materials, shapes, and manufacturing techniques may also be used to implement the invention. Moreover, while the low emissive camouflage flakes 1, 2 have been described in the context of skin camouflage and camouflage paints, they may as well be employed for other purposes, such as forming a constituent part in different camouflage materials, or be a part of various make-up products. Therefore, it is to be understood that this disclosure is only illustrative and exemplary of the present invention and is merely for the purpose of providing a full and enabling disclosure of the invention. Accordingly, it is intended that the invention should be limited only by the scope of the claims appended hereinafter.

## Claims

1. A low emissive camouflage flake (1, 2) for use in for example camouflage paints and skin camouflage, **characterized in that** the low emissive camouflage flake (1, 2) comprises a metal layer (11, 21) having reflective properties in the thermal radiation range, at least one side of the metal layer (11, 21) being coated with a coloured coating (13, 23) having transparency properties in the thermal radiation range.

2. A low emissive camouflage flake according to claim 1, wherein the metal layer (11, 21) has reflective properties in the wavelength regions of 3-5 and 8-14 micrometers.

3. A low emissive camouflage flake according to claim 2, wherein the metal layer (11) is a metal foil (11), said metal foil (11) being coated with the coloured coating (13) on both sides.

4. A low emissive camouflage flake according to claim 3, wherein the metal foil (11) is an aluminium foil.

5. A low emissive camouflage flake according to claim 2, wherein the low emissive camouflage flake (1, 2) further comprises a stabilizing film (25), both sides of the stabilizing film (25) being coated with said metal layer (21) which in turn is coated with said coloured coating (23) on the side not being adjacent to the stabilizing film (25).

6. A low emissive camouflage flake according to claim 5, wherein the metal layer (21) is an evaporated metal film.

7. A low emissive camouflage flake according to claims 5 or 6, wherein the stabilizing film (25) is a polyester (PET) film.

8. A low emissive camouflage flake according to any of the preceding claims, wherein the coloured coating (13, 23) is a layer of coloured lacquer.

9. A low emissive camouflage flake according to any of the preceding claims, wherein the coloured coating (13, 23) is a coloured plastic film.

10. A low emissive camouflage flake according to any of the preceding claims, wherein the coloured coating (13, 23) is a sputter deposit layer.

11. A low emissive camouflage flake according to claim 10, wherein the sputter material/materials that forms the sputter deposit layer is chosen from the group consisting of nickel, copper, aluminium, nickel oxide, copper oxide and aluminium oxide.

12. A low emissive camouflage flake according to any of the preceding claims, wherein the low emissive camouflage flakes have a maximum extension of 0.05-1 millimetre.

13. A low emissive camouflage flake according to any of the preceding claims, wherein the low emissive camouflage flakes have a maximum extension of 0.2-0.8 millimetre.

14. A low emissive camouflage flake according to any of the preceding claims, wherein the low emissive camouflage flake is substantially hexagonally shaped.

15. A method for manufacturing low emissive camouflage flakes (1, 2) for use in for example skin camouflage or camouflage paint, **characterized in that** the method comprises the steps of;
forming a low emissive camouflage sheet (100, 200) by coating at least one side of a metal layer (11, 21) having reflective properties in the thermal radiation range with a coloured coating (13, 23) having transparency properties in the thermal radiation range, and
dividing the low emissive camouflage sheet (100, 200) into a plurality of low emissive camouflage flakes (1, 2).

16. A method according to claim 15, wherein the step of forming the low emissive camouflage sheet (100) comprises the step of coating both sides of said metal layer (11) with said coloured coating (13).

17. A method according to claim 15, wherein the step of forming the low emissive camouflage sheet (200) comprises the step of coating both sides of a stabilizing film (25) with the metal layer (21), and coating said metal layer (21) with said coloured coating (23) on the side not being adjacent to the stabilizing film (25).

18. A method according to claim 17, wherein the step of coating both sides of the stabilizing film (25) with a metal layer (21) is performed by applying a metal film onto the stabilizing film (25) by means of a metal evaporation process.

19. A method according to any of the claims 17-18, wherein said stabilizing film (25) is a polyester (PET) film.

20. A method according to any of the claims 15-19, wherein the step of coating the metal layer (11,21) with a coloured coating (13,23) is performed by applying a coloured lacquer thereto.

21. A method according to any of the claims 15-19, wherein the step of coating the metal layer (11, 21) with a coloured coating (13, 23) is performed by applying a coloured plastic film thereto.

22. A method according to any of the claims 15-19, wherein the step of coating the metal layer (11, 21) with a coloured coating (13, 23) is performed by applying a sputter deposit layer thereto.

23. A method according to claim 22, wherein the sputter material/materials that forms the sputter deposit layer constituting the coloured coating (13,23) is chosen from the group consisting of nickel, copper, aluminium, nickel oxide, copper oxide and aluminium oxide.

24. A skin camouflage for providing visual and thermal camouflage to a user thereof, said skin camouflage comprising camouflage particles carried by a binder being suitable for skin application, **characterized in that** said binder is substantially transparent in the 3-5 and 8-14 micrometer wavelength regions, and **in that** the camouflage particles are the low emissive camouflage flakes (1,2) according to any of the claims 1-14.

25. A skin camouflage according to claim 24, wherein the binder is substantially transparent to light in the visible spectrum.

26. A skin camouflage according to claim 24 or 25, wherein the binder comprises at least one substance chosen from the group consisting of jojoba oil, cetyl alcohol, beeswax and mango butter.

27. A skin camouflage according to claim 24 or 25, wherein the binder comprises a mixture of cellulose and xanthane rubber.

28. A method for manufacturing a skin camouflage for providing visual and thermal camouflage to a user thereof, **characterized in that** the method comprises the steps of;
manufacturing the low emissive camouflage flakes (1,2) according to any of the claims 15-23, and
adding the low emissive camouflage flakes (1, 2) to a binder being suitable for skin application, said binder being substantially transparent in the 3-5 and 8-14 micrometer wavelength regions.

29. A camouflage paint for providing visual and thermal camouflage to an object on which the paint is applied, said camouflage paint comprising camouflage particles carried by a paint binder, **characterized in that** said binder is substantially transparent in the 3-5 and 8-14 micrometer wavelength regions, and **in that** the camouflage particles are the low emissive camouflage flakes (1, 2) according to any of the claims 1-14.

30. A camouflage paint according to claim 29, wherein the binder is substantially transparent to light in the visible spectrum.

31. A method for manufacturing a camouflage paint for providing visual and thermal camouflage to an object on which the paint is applied, **characterized in that** the method comprises the steps of;
manufacturing the low emissive camouflage flakes (1, 2) according to any of the claims 15-23, and
adding the low emissive camouflage flakes (1, 2) to a paint binder being substantially transparent in the 3-5 and 8-14 micrometer wavelength regions.
